# EUROPÄISCHE PATENTSCHRIFT

(11) **EP 1 118 163 B1**
(45) Veröffentlichungstag und Bekanntmachung des Hinweises auf die Patenterteilung: **19.05.2004**
(21) Anmeldenummer: 99969860.8
(22) Anmeldetag: 16.09.1999
(51) Int. Cl.: H04B 1/28, H04B 1/30

(54) **EMPFANGSFREQUENZBANDFILTERUNG**
FILTERING OF A RECEIVE FREQUENCY BAND
FILTRAGE D'UNE BANDE DE FREQUENCES DE RECEPTION

(30) Priorität: 30.09.1998 DE 19845054
(43) Veröffentlichungstag der Anmeldung: 25.07.2001
(73) Patentinhaber: SIEMENS AKTIENGESELLSCHAFT, 80333 München (DE)
(72) Erfinder: BOLINTH, Edgar, D-41189 Mönchengladbach (DE); SCHWARK, Uwe, D-46399 Bocholt (DE); BIENEK, Bernd, D-46395 Bocholt (DE); KALAYCI, Yusuf, D-47053 Duisburg (DE)
(86) Internationale Anmeldenummer: PCT/DE1999/002960
(87) Internationale Veröffentlichungsnummer: WO 2000/019624

(56) Entgegenhaltungen:
- US-A- 5 604 746
- US-A- 5 619 536

## Beschreibung

Die Erfindung betrifft ein Verfahren und einen Empfänger zum Empfangen von Übertragungssignalen, die in verschiedenen Subfrequenzbändern eines Empfangsfrequenzbandes übertragen werden können.

Insbesondere bei Funksystemen zur Übertragung von Übertragungssignalen per Funk, aber auch bei leitungsgestützten Übertragungssystemen, ist es von Vorteil, wenn die Übertragungssignale in verschiedenen Subfrequenzbändern eines Empfangsfrequenzbandes empfangen werden können. Die einzelnen Subfrequenzbänder unterscheiden sich hinsichtlich ihrer Bandbreite und/oder hinsichtlich ihrer Frequenzlage in dem Empfangsfrequenzband voneinander. Durch einen Wechsel von einem ersten Subfrequenzband auf ein zweites Subfrequenzband, das eine größere Bandbreite aufweist, können beispielsweise übertragungssignale mit größerer Übertragungsrate übertragen werden. Im Grenzfall ist das verwendete Subfrequenzband gleich dem Empfangsfrequenzband, d. h. die maximal zur Verfügung stehende Frequenzbandbreite wird durch das Subfrequenzband ausgenutzt.

Es ist bekannt, in einem Empfänger durch Abstimmen des Empfangsfrequenzbandes auf eine Trägerfrequenz und durch eine Filterung des Empfangsfrequenzbandes ein Signalfrequenzband herauszufiltern, das die Übertragungssignale enthält. Das Signalfrequenzband wird anschließend in einem Demodulator demoduliert, so daß an dem Ausgang des Demodulators ein Basisfrequenzband bereitsteht, das die Übertragungssignale enthält. Das Basisfrequenzband wird beispielsweise weiterverarbeitet, indem die in ihm enthaltenen Informationen mittels eines Analog-/Digitalwandlers digitalisiert werden und durch eine anschließende Feinfilterung und/oder weitere Verarbeitungsschritte für ihren bestimmungsgemäßen Gebrauch als Übertragungssignale aufbereitet werden.

Als Filter zum Herausfiltern eines Signalfrequenzbandes als Subfrequenzband aus dem Empfangsfrequenzband sind Oberflächenwellenfilter (SAW-Filter) bekannt. SAW-Filter haben jedoch den Nachteil, verhältnismäßig kostenaufwendig bei ihrer Herstellung bzw. Anschaffung zu sein.

Zum Herausfiltern von Subfrequenzbändern verschiedener Bandbreite in einem Hochfrequenzteil eines Empfängers werden eine Mehrzahl von SAW-Filtern und/oder SAW-Filter mit verschiednen Filterbandbreiten verwendet. Jeder SAW-Filter bzw. jede Filterbandbreite entspricht einer Bandbreite eines der Subfrequenzbänder, die in dem Empfänger herausgefiltert werden können. Wegen der Mehrzahl von SAW-Filtern bzw. der Mehrzahl von Filterbandbreiten ist ein solcher Empfänger verhältnismäßig teuer. Hinzu kommt, daß zusätzliche, verhältnismäßig kostenaufwendige Schaltelemente, beispielsweise PIN-Dioden zum Umschalten auf einen anderen SAW-Filter bzw. auf eine andere Filterbandbreite beim Wechsel des Subfrequenzbandes benötigt werden.

Aus der US 5,604,746 ist ein Verfahren und ein Empfänger zum Empfangen von Übertragungssignalen, die in verschiedenen Subfrequenzbändern eines Empfangsfrequenzbandes übertragen werden können, bekannt, bei dem durch Hinzufügen einer Trägerfrequenz zu dem Empfangsfrequenzband und durch Vorfilterung des Empfangsfrequenzbandes ein erstes Signalfrequenzband herausgefiltert wird, das die Übertragungssignale enthält, bei dem durch Hinzufügen einer Zwischenfrequenz zu dem ersten Signalfrequenzband durch Demodulierung des ersten Signalfrequenzbandes ein Basisfrequenzband erzeugt wird, das die Übertragungssignale enthält und bei dem zumindest ein zweites Signalfrequenzband, das die Übertragungssignale enthält, durch Nachfilterung aus dem Basisfrequenzband herausgefiltert wird, wobei die Trägerfrequenz und/oder die Zwischenfrequenz derart mit einem oder mehreren Filterparametern bei der Nachfilterung abgestimmt werden, dass das gewünschte Subfrequenzband als zweites Frequenzband zur Verfügung steht.

Aufgabe der vorliegenden Erfindung ist es, ein Verfahren und einen Empfänger zum Empfangen von Übertragungssignalen, die in verschiedenen Subfrequenzbändern eines Empfangsfrequenzbandes übertragen werden können, anzugeben, bei dessen Anwendung bzw. Verwendung geringe Hardware-Kosten erforderlich sind.

Diese Aufgabe wird durch ein Verfahren mit den Merkmalen des Anspruchs 1 und durch einen Empfänger mit den Merkmalen des Anspruchs 7 gelöst. Weiterbildungen sind Gegenstand der jeweils abhängigen Ansprüche.

Bei dem erfindungsgemäßen Verfahren werden durch Hinzufügen einer Trägerfrequenz zu einem Empfangsfrequenzband und durch eine Vorfilterung des Empfangsfrequenzbandes ein erstes Signalfrequenzband herausgefiltert, das die Übertragungssignale enthält. Durch Hinzufügen einer Zwischenfrequenz zu dem ersten Signalfrequenzband und durch eine Demodulierung des ersten Signalfrequenzbandes wird ein Basisfrequenzband erzeugt, dessen Bandbreite vorzugsweise im wesentlichen der Bandbreite des ersten Signalfrequenzbandes entspricht und das die Übertragungssignale enthält. Durch eine Nachfilterung wird dann ein zweites Signalfrequenzband, das die Übertragungssignale enthält, aus dem Basisband herausgefiltert. Die Trägerfrequenz und/oder die Zwischenfrequenz werden derart mit einem oder mehreren Filterparametern bei der Nachfilterung abgestimmt, daß das gewünschte Subfrequenzband als zweites Signalfrequenzband zur Verfügung steht. Danach wird die in dem ersten Signalfrequenzband enthaltene Information digitalisiert. Insbesondere wird dann die Demodulation und die Nachfilterung als Feinfilterung an den digitalisierten Informationen vorgenommen. Dabei wird die Nachfilterung mit der Trägerfrequenz und/oder der Zwischenfrequenz abgestimmt. Vorrichtungsseitig ist also ein Digitalfilter vorgesehen, um aus der digitalisierten Information die Übertragungssignale herauszufiltern. Der Digitalfilter ist von der gemeinsamen Frequenz- und Nachfiltersteuerung des Vorfilters und Nachfilters ansteuerbar.

Gemäß einem Kerngedanken der Erfindung erfolgt das Herausfiltern des gewünschten Subfrequenzbandes durch eine kombinierte Vor- und Nachfilterung mit abgestimmten Filterfrequenzen bzw. Filterparametern bei der Vorfilterung und Nachfilterung. Ein wesentlicher Vorteil dieses Konzepts ist, daß bei der Vorfilterung ein Filter mit einer festen, unveränderlichen Filterbandbreite verwendet werden kann. Dadurch lassen sich Kosten einsparen, die andererseits bei der Nachfilterung nicht in der gleichen Höhe anfallen, da das Herausfiltern des gewünschten Subfrequenzbandes aus dem Basisband wesentlich kostengünstiger realisiert werden kann.

Der erfindungsgemäße Empfänger weist einen ersten Oszillator zum Einkoppeln einer Trägerfrequenz in einen Empfangspfad des Empfangsfrequenzbandes auf. An dem Empfangspfad ist ein Vorfilter angeordnet, um aus dem auf die Trägerfrequenz abgestimmten Empfangsfrequenzband ein erstes Signalfrequenzband herauszufiltern, das die Übertragungssignale enthält. Weiterhin ist ein zweiter Oszillator zum Einkoppeln einer Zwischenfrequenz in einen ersten Signalpfad des ersten Signalfrequenzbandes vorgesehen. An dem ersten Signalpfad ist ein Demodulator angeordnet, um das erste Signalfrequenzband mit der eingekoppelten Zwischenfrequenz zu demodulieren und ein Basisfrequenzband zu erzeugen, dessen Bandbreite im wesentlichen der Bandbreite des ersten Signalfrequenzbandes entspricht und das die Übertragungssignale enthält. Ein Nachfilter ist an einem Basispfad des Basisfrequenzbandes angeordnet, um aus dem Basisfrequenzband ein zweites Signalfrequenzband herauszufiltern, welches die Übertragungssignale enthält. Es ist eine gemeinsame Frequenz- und Nachfiltersteuerung des Nachfilters sowie des ersten Oszillators und/oder des zweiten Oszillators vorgesehen, um die Trägerfrequenz und/oder die Zwischenfrequenz derart mit einem oder mehreren Filterparametern des Nachfilters abzustimmen, daß das gewünschte Subfrequenzband als zweites Signalfrequenzband zur Verfügung steht. Unter einer gemeinsamen Frequenz- und Nachfiltersteuerung ist nicht nur eine zentrale Steuerung zu verstehen, sondern auch eine verteilte Steuerung, wobei z.B. eine Steuereinheit der Nachfilterung Informationen an eine Steuereinheit des ersten und/oder zweiten Oszillators liefert und/oder umgekehrt. Des Weiteren wird die in dem ersten Signalfrequenzband enthaltene Information digitalisiert. Insbesondere wird dann die Demodulation und die Nachfilterung als Feinfilterung an den digitalisierten Informationen vorgenommen. Dabei wird die Nachfilterung mit der Trägerfrequenz und/oder der Zwischenfrequenz abgestimmt. Vorrichtungsseitig ist also ein Digitalfilter vorgesehen, um aus der digitalisierten Information die Übertragungssignale herauszufiltern. Der Digitalfilter ist von der gemeinsamen Frequenz- und Nachfiltersteuerung des Vorfilters und Nachfilters ansteuerbar.

Vorzugsweise weist der Nachfilter einen Tiefpaßfilter oder einen Hochpaßfilter oder eine Hochpaß-/Tiefpaß-Filterkombination auf, dessen Grenzfrequenz bzw. deren Grenzfrequenzen derart mit der Trägerfrequenz und/oder der Zwischenfrequenz abgestimmt wird, daß die Grenzfrequenz bzw. die Grenzfrequenzen das gewünschte Subfrequenzband von allen etwaig noch in dem Basisfrequenzband vorhandenen Nachbarfrequenzbändern trennt. Tiefpaßfilter und/oder Hochpaßfilter zur Filterung des Basisfrequenzbandes sind kostengünstig zu realisieren, beispielsweise mit kaskadierten RC-Gliedern, die Bestandteile einer einzigen integrierten Schaltung sind. Es können jedoch auch andere, an sich bekannte Lösungen gewählt werden, etwa Operationsverstärker, die mit RC-Gliedern rückgekoppelt sind.

Insbesondere wird die Zwischenfrequenz, die den Frequenzwert Null des Basisfrequenzbandes festlegt, derart gewählt, daß der Frequenzwert Null in der Mitte des gewünschten Subfrequenzband liegt.

Bei der Ausführung des erfindungsgemäßen Verfahrens wird in vielen Fällen nur ein einziges Subfrequenzband, nämlich das gewünschte Subfrequenzband herausgefiltert. Bei einer Variante wird jedoch eine Mehrzahl von gewünschten Subfrequenzbändern herausgefiltert.

Insbesondere wird bei der Nachfilterung derart ein Hochpaßfilter oder eine Hochpaß-/Tiefpaß-Filterkombination verwendet, um das einzige gewünschte Subfrequenzband oder eines der gewünschten Subfrequenzbänder herauszufiltern, das nicht symmetrisch zu der Frequenz Null des Basisfrequenzbands liegt. Werden dementsprechend bei der Nachfilterung sowohl ein Tiefpaßfilter als auch ein Hochpaßfilter und/oder eine Hochpaß/Tiefpaß-Filterkombination verwendet, wird sowohl ein gewünschtes Subfrequenzband herausgefiltert, das symmetrisch zu dem Frequenzwert Null liegt, als auch ein oder mehrere Subfrequenzbänder herausgefiltert, die nicht symmetrisch zu dem Frequenzwert Null des Basisfrequenzbands liegen.

Wird das gewünschte Subfrequenzband oder eines der gewünschten Subfrequenzbänder durch eine Hochpaßfilterung des Basisfrequenzbands oder eine Kombination aus Hochpaß- und Tiefpaßfilterung des Basisfrequenzbands herausgefiltert, wobei das gewünschte Subfrequenzband entweder im positiven oder im negativen Frequenzbereich des Basisfrequenzbands liegt, wird nach dem Herausfiltern vorzugsweise das herausgefilterte Subfrequenzband digitalisiert und durch die digitale Konvertierung in einen Frequenzbereich versetzt, der den Frequenzwert Null enthält. Insbesondere liegt das so gewonnene, gewünschte Subfrequenzband dann symmetrisch zu dem Frequenzwert Null.

Bei einer bevorzugten Weiterbildung wird die Trägerfrequenz für die Vorfilterung derart eingestellt, daß ein oder mehrere Nachbarfrequenzbänder des gewünschten Subfrequenzbandes bereits bei der Vorfilterung abgetrennt werden. Insbesondere wirkt die Kombination der bei der Vorfilterung verwendeten, fest eingestellten Filterfrequenzbandbreite mit der beliebig einstellbaren Trägerfrequenz, die in den Empfangspfad eingekoppelt wird, wie ein frei einstellbarer Bandpassfilter. Auf diese Wiese können bereits durch die Vorfilterung entweder alle Nachbarfrequenzbänder oberhalb oder alle Nachbarfrequenzbänder unterhalb des gewünschten Subfrequenzbandes abgetrennt werden. Von Vorteil ist dies insbesondere dann, wenn Nachbarfrequenzbänder mit einer größeren Empfangsfeldstärke als das gewünschte Subfrequenzband empfangen werden. Das Einstellen der Grenzen des Vorfilterfrequenzbereiches, d. h. das Einstellen der Bandpass-Abschnittsfrequenzen wird aber vorzugsweise auch mit der Wahl der Zwischenfrequenz und der Wahl des oder der Filterparameter des Nachfilters abgestimmt.

Es ist an sich bekannt, auf dem Signalweg zwischen dem Vorfilter und dem Demodulator eine Verstärkeranordnung vorzusehen, die den Pegel des bei der Vorfilterung herausgefilterten Frequenzbandes optimal auf den Demodulator abstimmt. Sind nun in dem ersten Signalfrequenzband eine Mehrzahl von Subfrequenzbändern vorhanden, von denen eines das gewünschte Subfrequenzband ist, und hat das gewünschte Subfrequenzband eine geringere Feldstärke bzw. einen geringeren Pegel als eines oder mehrere der Nachbarfrequenzbänder, ist es vorteilhaft, wenn nach zumindest teilweiser Durchführung der Nachfilterung das zweite Signalfrequenzband verstärkt wird. Auf diese Weise wird der aufgrund der Anpassung an den Demodulator geringe Pegel des gewünschten Subfrequenzbandes angehoben und zwar vorzugsweise auf einen Pegelwert, der etwaig nachfolgenden Verarbeitungsstufen angepaßt ist. Vorrichtungsseitig ist daher bei einer Weiterbildung an einem zweiten Signalpfad des zweiten Signalfrequenzbandes in Signallaufrichtung hinter dem Nachfilter bzw. hinter dem ersten Teil des Nachfilters ein zweiter Signalbandverstärker zum Verstärken des zweiten Signalfrequenzbandes angeordnet.

Bei einer Weiterbildung weist der zweite Signalpfad einen Bypass zur verstärkungsfreien Weiterleitung des zweiten Signalfrequenzbandes auf, der parallel zu dem zweiten Signalbandverstärker geschaltet ist.

Der zweite Signalbandverstärker ist insbesondere aus einer Mehrzahl von Einzelverstärkern zusammengesetzt, beispielsweise aus zwei Einzelverstärkern mit rauscharmer Eingangsverstärkerstufe.

Besonders bevorzugt wird eine Ausgestaltung des erfindungsgemäßen Empfängers, bei der der gegebenenfalls vorhandene zweite Signalbandverstärker und zumindest ein Teil des Nachfilters, in einer gemeinsamen integrierten Schaltung angeordnet sind.

Weiterhin besonders bevorzugt wird, daß der Demodulator und zumindest ein Teil des Nachfilters in einer gemeinsamen integrierten Schaltung angeordnet sind. Durch den entsprechend hohen Grad an Integration werden Herstellungskosten und Raum gespart.

Vorrichtungsseitig ist dann der Analog-/Digitalwandler in Signallaufrichtung hinter dem Vorfilter und vor dem digitalen Demodulator angeordnet.

Ein digitaler Demodulator, insbesondere ein digitaler I/Q-Demodulator, führt eine digitale Herabsetzung des ersten Signalfrequenzbandes, beispielsweise aus Frequenzbereichen um 10 MHz, ins Basisfrequenzband durch.

Das erfindungsgemäße Verfahren ist nicht auf Empfangsfrequenzbänder beschränkt, deren Subfrequenzbänder in nicht überlappenden Frequenzbereichen liegen. Vielmehr ist das Verfahren auch bei einander überlappenden Subfrequenzbändern anwendbar. Beispielsweise überlappen sich Subfrequenzbänder nach dem OFDM (Orthogonal Frequency Division Multiplex)-Modulationsverfahren. Jedoch ist die Feldstärke der nächstbenachbarten Subfrequenzbänder eines bestimmten Subfrequenzbands bei dem Frequenzwert etwa Null, bei dem das bestimmte Subfrequenzband seine maximale Feldstärke hat. In diesem Sinne sind die einzelnen Subfrequenzbänder orthogonale Subfrequenzbänder. Bei einer Abtastung der Empfangsfrequenzbands kann dann beispielsweise das bestimmte Subfrequenzband im Bereich seines Maximums abgetastet werden, so daß allenfalls geringe Signalanteile und im Idealfall keine Signalanteile von benachbarten Subfrequenzbändern mit erfaßt werden. Da bei einander überlappenden Subfrequenzbändern keine scharfen Frequenzgrenzen der einzelnen Subfrequenzbänder vorhanden sind, treten beim Filtern des Empfangsfrequenzbands und der weiteren aus dem Empfangsfrequenzband herausgefilteren Frequenzbänder an die Stelle der Grenzfrequenzen der Subfrequenzbänder sinnvolle Trennfrequenzen, an denen die Trennung zwischen einem herausgefilterten Frequenzbereich und abgeschnittenen Frequenzbereichen stattfindet. Die Trennfrequenzen sind so zu wählen, daß die herausgefilterten Frequenzbereiche die gewünschten Subfrequenzbänder bzw. das gewünschte Subfrequenzband in auswertbarer Form enthalten, d.h. die enthaltenen Informationen auswertbar sind und die Signalanteile der abgeschnittenen Frequenzbereiche die Auswertung nicht behindern und/oder unmöglich machen.

Die vorliegende Erfindung wird nun anhand von Ausführungsbeispielen näher erläutert. Sie ist jedoch nicht auf diese Ausführungsbeispiele beschränkt. In der folgenden Beschreibung wird auf die beigefügte Zeichnung Bezug genommen. Die einzelnen Figuren der Zeichnung zeigen:
- Fig. 1: eine besonders bevorzugte Ausführungsform eines erfindungsgemäßen Empfängers und
- Fig. 2: die Empfangsfeldstärken benachbarter Subfrequenzbänder eines Empfangsfrequenzbandes.
- Fig. 3: das Empfangsfrequenzband von Fig. 2 nach dem Hinzufügen bzw. Einkoppeln einer Trägerfrequenz,
- Fig. 4: das aus dem Empfangsfrequenzband von Fig. 3 herausgefilterte erste Signalfrequenzband,
- Fig. 5: das aus dem ersten Signalfrequenzband von Fig. 4 erzeugte Basisfrequenzband und
- Fig. 6: das aus dem Basisfrequenzband von Fig. 5 herausgefilterte, gewünschte Subfrequenzband.

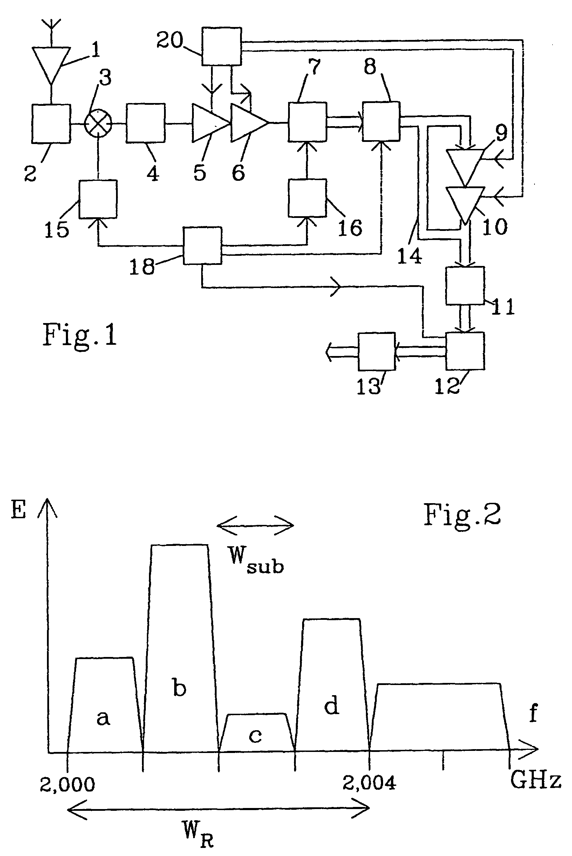

Fig. 1 zeigt einen erfindungsgemäßen Empfänger zum Empfang von Funksignalen, die in einem zukünftigen Funksystem, dem UMTS (Universal Mobile Telecommunication System) übertragen werden. Für bestimmte Betriebsarten, beispielsweise den unkoordinierten Betrieb einer Vielzahl von Mobiltelefonen, stehen Frequenzbänder begrenzter Bandbreite zur Verfügung. In dem gezeigten Beispiel hat das Empfangsfrequenzband eine Frequenzbandbreite von 4,096 MHz. Die Trägerfrequenzen zur Funkübertragung der Übertragungssignale liegen im Bereich von 2 GHz.

Der in Fig. 1 dargestellte Empfänger weist in Signallaufrichtung zunächst eingangsseitig einen Eingangsverstärker 1 und einen Eingangsfilter 2 auf, wie aus dem Stand der Technik bekannt ist. Der Eingangsfilter 2 dient dem groben Herausfiltern des bei dem UMTS genutzten Frequenzbereiches. In Signallaufrichtung schließt sich an den Eingangsfilter 2 eine Trägerfrequenzeinkopplung 3 an, an der die jeweilige von einem Trägerfrequenzoszillator 15 erzeugte Trägerfrequenz in den Signallaufweg eingekoppelt wird.

In Signallaufrichtung folgen hinter der Trägerfrequenzeinkopplung 3 zunächst ein SAW-Filter (Oberflächenwellenfilter) 4, zwei hintereinandergeschaltete LNA (Verstärker mit rauscharmer Eingangsverstärkerstufe) 5, 6 und ein I/Q-Demodulator (in Phase/Quadratur-Demodulator) 7. Dem I/Q-Demodulator 7 wird von einem Zwischenfrequenz-Oszillator 16 eine Zwischenfrequenz zur Verfügung gestellt, die den Frequenzwert Null des Basisfrequenzbands festlegt, das von dem I/Q-Demodulator 7 durch Demodulation eines an ihm eingangsseitig anliegenden Frequenzbandes erzeugt wird.

Ausgangsseitig des I/Q-Demodulators 7 schließt sich ein Abschnitt des Signallaufweges an, an dem zunächst ein variabler Tiefpaßfilter 8 angeordnet ist. Es folgt eine Reihenschaltung von zwei weiteren LNA 9, 10, wobei parallel zu den LNA 9, 10 ein Bypass 14 geschaltet ist, der es erlaubt, Ausgangssingale des Tiefpaßfilters 8 unverstärkt an den in Signallaufrichtung folgenden A/D-Wandler (Analog-/Digital-Wandler) 11 weiterzuleiten. Auf den A/D-Wandler 11 folgen ein Digitalfilter 12 und anschließend ein Rake-Kombinierer 13 zum Kombinieren einzelner Komponenten des Empfangssignals, die beispielsweise aufgrund von Mehrwegeausbreitung zeitlich versetzt von dem Empfänger empfangen wurden.

Die LNA 5, 6 und die LNA 9, 10 werden von einer automatischen Verstärkersteuerung 20 angesteuert. Die Verstärkersteuerung 20 steuert zunächst die LNA 5, 6 derart an, daß der Ausgangspegel des LNA 6 optimal auf den I/Q-Demodulator 7 abgestimmt ist. Damit wird einerseits ein ausreichend großer Ausgangspegel an der Ausgangsseite des I/Q-Demodulators 7 erreicht und andererseits ein Übersteuern des I/Q-Demodulators 7 vermieden. Weiterhin werden die LNA 9, 10 derart von der automatischen Verstärkersteuerung 20 angesteuert, daß an dem A/D-Wandler 11 der optimale Eingangspegel anliegt. Ist der Ausgangspegel des Tiefpaßfilters 8 ausreichend groß, wird das Signal ohne Verstärkung über den Bypass 14 direkt an den A/D-Wandler 11 weitergeleitet. Hierfür sind nicht näher dargestellte Schaltmittel vorgesehen, die ebenfalls von der automatischen Verstärkersteuerung 20 angesteuert werden.

Eine kombinierte Frequenz- und Nachfiltersteuerung steuert den Trägerfrequenzoszillator 15, den Zwischenfrequenzoszillator 16, den Tiefpaßfilter 8 und den Digitalfilter 12 an, und zwar derart, daß am Ausgang des Digitalfilters 12 Ubertragungssignale eines gewünschten Subfrequenzbandes anliegen. Dazu wird von einer nicht dargestellten Einrichtung der Frequenz- und Nachfiltersteuerung 18 sowohl die Frequenzlage als auch die Bandbreite des gewünschten Subfrequenzbandes zur Verfügung gestellt. Auf die von der Frequenz- und Nachfiltersteuerung 18 gesteuerte Signalverarbeitung wird noch anhand eines Ausführungsbeispiels näher eingegangen.

Der Tiefpaßfilter 8 besteht aus kaskadierten RC-Gliedern, die in einer gemeinsamen integrierten Schaltung mit dem I/Q-Demodulator 7, den LNA 9, 10 und dem Bypass 14 auf einem Chip angeordnet sind. Die gesamte integrierte Schaltung kann somit bei geringen Mehrkosten für die RC-Glieder kostengünstig in großen Stückzahlen hergestellt werden. Die gesamte Filterkombination, bestehend aus dem SAW-Filter 4, dem Tiefpaßfilter 8 und dem Digitalfilter 12, kann somit kostengünstiger als beim Stand der Technik hergestellt werden.

Mit dem in Fig. 1 dargestellten Empfänger lassen sich Subfrequenzbänder mit Kanalbandbreiten von 0,256 MHz, 0,512 MHz, 1,024 MHz, 2,048 MHz und 4,096 MHz herausfiltern, wobei ein. Subfrequenzband mit einer Bandbreite von 4,096 MHz dem gesamten Empfangsfrequenzband entspricht. Da die Bandbreite aller möglichen Subfrequenzbänder durch Teilung mittels einer ganzen Zahl aus der Empfangsfrequenzbandbreite erzielbar sind, kann der Hardware-Aufwand im digitalen Bereich des Empfängers gering gehalten werden. Insbesondere kann die Anpassung der Arbeitsweise des digitalen Bereichs an eine geringere Subfrequenzbandbreite einfach durch Reduktion der Taktrate auf den entsprechenden Bruchteil bewirkt werden.

Unter Bezugnahme auf Fig. 2 bis Fig. 6 wird nun beispielhaft das Herausfiltern eines Subfrequenzbandes in dem in Fig. 1 gezeigten Empfänger erläutert. In Fig. 2 sind ein Empfangsfrequenzband der Frequenzbandbreite W_{R} mit insgesamt vier Subfrequenzbändern jeweils der Frequenzbandbreite W_{Sub} dargestellt, sowie weitere Frequenzbänder, in denen keine Übertragung von Übertragungssignalen zu erwarten ist, selbst wenn ein Wechsel des Funkkanals stattfindet. Die Subfrequenzbänder sind mit den Buchstaben a bis d bezeichnet. In dem Ausführungsbeispiel soll das Subfrequenzband c herausgefiltert werden. Das Subfrequenzband c entspricht einem Übertragungskanal, über den beispielsweise Sprechdaten von einer Basisstation zu einem Mobiltelefon übertragen werden. Das Diagramm gemäß Fig. 2 stellt eine Momentaufnahme dar. Durch Veränderung der Betriebssituation in dem gesamten Übertragungssystem oder in Teilbereichen des Übertragungssystems, im Beispiel des UMTS, kann sich die Frequenzlage und die Frequenzbandbreite W_{Sub} des gewünschten Subfrequenzbandes ändern. Insbesondere können zu einem anderen Zeitpunkt auch Subfrequenzbänder unterschiedlicher Frequenzbandbreite W_{sub} in den Grenzen der Subfrequenzbänder a bis d in dem Empfangsfrequenzband vorliegen.

Der Einfachheit halber wird im folgenden davon ausgegangen, daß die Frequenzbandbreite W_{R} des Empfangsfrequenzbandes 4 MHz beträgt, daß die Frequenzbandbreiten W_{Sub} der einzelnen Subfrequenzbänder jeweils 1 MHz betragen und daß das Empfangsfrequenzband mittels einer Trägerfrequenz von 1,900 GHz zu dem Empfänger übertragen wird. Das Empfangsfrequenzband erstreckt sich bei der Übertragung zu dem Empfänger in dem Frequenzbereich von 2,000 GHz bis 2,004 GHz. Das gewünschte Subfrequenzband liegt in dem Frequenzbereich 2,002 GHz bis 2,003 GHz.

Die Feldstärken der einzelnen Subfrequenzbänder a bis d sind in Fig. 2 dargestellt. Das Diagramm zeigt die verarbeitungstechnisch ungünstige Situation, daß die Feldstärke des gewünschten Subfrequenzbandes c geringer ist als die Feldstärken der beiden nächstbenachbarten Subfrequenzbänder b, d. Bei der Verarbeitung des Empfangssignals wird nun die Trägerfrequenz an der Trägerfrequenzeinkopplung 3 in den Signallaufweg eingekoppelt. Normalerweise wird versucht, exakt die Trägerfrequenz einzukoppeln, die dem Empfänger als die Trägerfrequenz bekannt ist, welche beim Senden des Empfangssignals verwendet wurde. Im vorliegenden Fall wird jedoch eine gegenüber der Sende-Trägerfrequenz von 1,900 GHz verstimmte Empfangs-Trägerfrequenz eingekoppelt. Hierzu steuert die Frequenz- und Nachfilterstreuerung 18 den Trägerfrequenzoszillator 15 derart an, daß dieser eine Empfangs-Trägerfrequenz von 1,902 GHz erzeugt. Diese Empfangs-Trägerfrequenz wird an der Trägerfrequenzeinkopplung 3 eingekoppelt.

Durch das Einkoppeln der Empfangs-Trägerfrequenz und Subtraktion wird ein in seiner Frequenz herabgesetztes Empfangsfrequenzband gebildet, in dem sich das gewünschte Subfrequenzband c im Frequenzbereich von 100 MHz bis 101 MHz befindet.

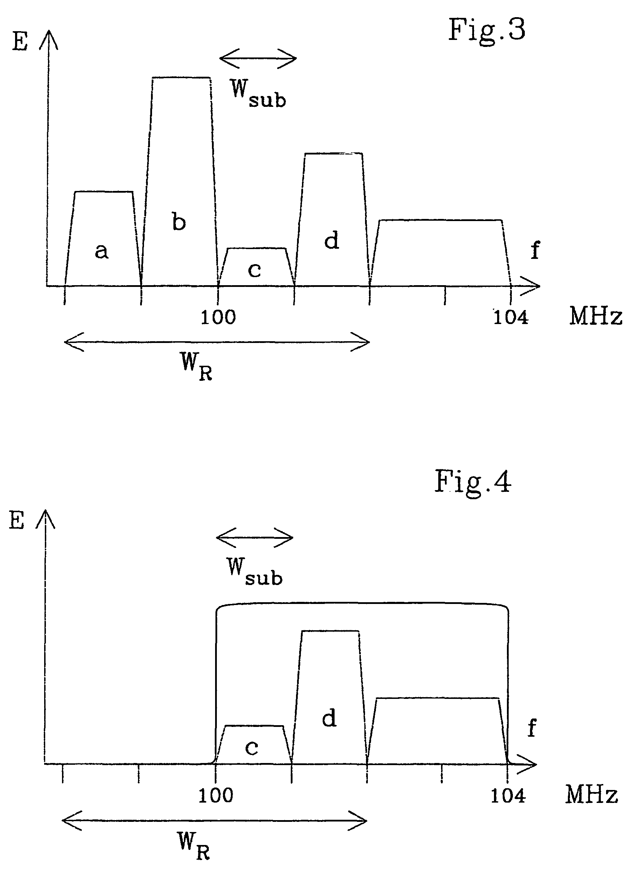

Der SAW-Filter 4 ist unveränderbar auf eine Frequenzbandbreite eingestellt, die der Frequenzbandbreite des Empfangsfrequenzbandes entspricht. Im Beispiel ist dies eine Frequenzbandbreite von 4 MHz. Der SAW-Filter 4 bewirkt ein Herausfiltern eines Frequenzbandes aus dem eingangsseitig an ihm anliegenden Frequenzband, dessen unterer Randwert gleich 100 MHz ist. Im vorliegenden Beispiel filtert der SAW-Filter 4 also ein erstes Signalfrequenzband heraus, welches im Frequenzbereich zwischen 100 MHz und 104 MHz liegt. Somit sind die Subfrequenzbänder a, b bereits in dem ersten Signalfrequenzband nicht mehr vorhanden (Fig. 4). Die Figur zeigt auch die Hüllkurve des SAW-Filters 4.

Die Empfangs-Trägerfrequenz wurde so gewählt, daß das unmittelbar benachbarte Subfrequenzband b mit der größeren Feldstärke von dem gewünschten Subfrequenzband c abgetrennt wurde. Wäre die Feldstärke des Subfrequenzbandes d größer als die Feldstärke des Subfrequenzbandes b gewesen, wäre die Empfangs-Trägerfrequenz auf den Wert 1,899 GHz eingestellt worden, so daß das Subfrequenzband d abgetrennt worden wäre.

Durch die automatische Verstärkersteuerung wird das erste Signalfrequenzband derart verstärkt, daß am Eingang des I/Q-Demodulators die Feldstärke des Subfrequenzbandes d dem optimalen Pegel des I/Q-Demodulators 7 entspricht. Zur Demodulation des Empfangssignals bzw. des ersten Signalfrequenzbandes steuert die Frequenz- und Nachfiltersteuerung 18 den Zwischenfrequenzoszillator 16 derart an, daß eine Zwischenfrequenz von 100,5 MHz dem I/Q-Demodulator 7 zur Verfügung gestellt wird. Generell ist die Zwischenfrequenz bei dem Ausführungsbeispiel so zu wählen, daß Frequenzwert in der Mitte des gewünschten Subfrequenzbandes gleich der Zwischenfrequenz ist. Bei der Demodulation wird nämlich ein Basisfrequenzband erzeugt, das sich um den Frequenzwert Null herum erstreckt und dessen Frequenzbandbreite aufgrund der Vorfilterung gleich der Frequenzbandbreite des ersten Signalfrequenzbandes ist.

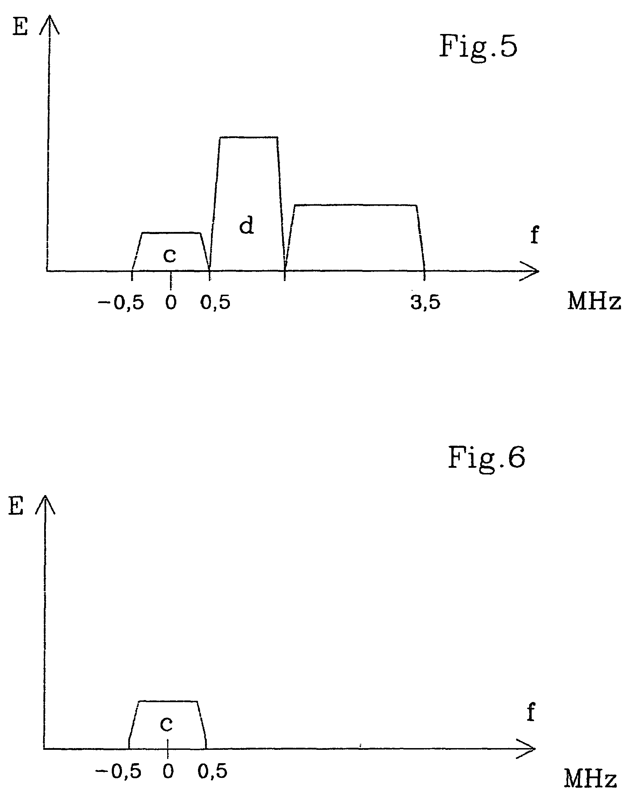

Im vorliegenden Ausführungsbeispiel wird ein Basisfrequenzband erzeugt, in dem noch vorhandene Subfrequenzbänder und benachbarte Frequenzbereiche mit Pegelwerten größer als Null im Frequenzbereich zwischen -0,5 MHz und +3,5 MHz liegen (siehe Fig. 5). Die Randlage des gewünschten Subfrequenzbandes wird dann bei dem nächsten Verarbeitungsschritt ausgenutzt. Dabei wird in dem Tiefpaßfilter 8 ein Frequenzbereich aus dem Basisfrequenzband herausgefiltert, dessen Betrag unterhalb der eingestellten Grenzfrequenz des Tiefpaßfilters 8 liegt. Im vorliegenden Fall wird die Grenzfrequenz des Tiefpaßfilters 8 auf einen Wert von 0,5 MHz eingestellt, indem die Frequenz- und Nachfiltersteuerung 18 den Tiefpaßfilter 8 entsprechend ansteuert. Im Ergebnis liegt an der Ausgangsseite als Rest des Basisfrequenzbandes nur noch das gewünschte Subfrequenzband c an (Fig. 6). Anschließend wird das Ausgangssignal den LNA 9, 10 zugeführt und sein Pegel auf den optimalen Wert für den A/D-Wandler 11 verstärkt.

Die aus dem gewünschten Subfrequenzband c erhaltene, digitalisierte Information wird in dem Digitalfilter 12 einer Feinfilterung unterzogen, wobei entsprechend der Bandbreite des Subfrequenzbandes c Korrekturen an der digitalisierten Information vorgenommen werden, um das gewünschte digitale Übertragungssignal zu erhalten. Hierzu steuert die gemeinsame Frequenz- und Nachfiltersteuerung 18 den Digitalfilter 12 entsprechend an. Die digitalisierten Übertragungssignale werden dem Rake-Kombinierer 13 zugeführt.

Bei einer Weiterbildung des in dem Ausführungsbeispiel beschriebenen Empfängers wird bei der Nachfilterung außer einem Tiefpaßfilter auch ein Bandpaß- oder ein Hochpaßfilter verwendet, um die dem gewünschten Subfrequenzband nächstbenachbarten Subfrequenzbänder herauszufiltern bzw. das nächstbenachbarte Subfrequenzband herauszufiltern. Aus den Signalen bzw. Feldstärken dieser nächstbenachbarten Subfrequenzbänder bzw. des nächstbenachbarten Subfrequenzbandes kann eine Gesamtleistung ermittelt werden. Die ermittelte Gesamtleistung ermöglicht es, die Lage des durch den SAW-Filter 4 realisierten Vorfilters für den Empfang des gewünschten Subfrequenzbandes zu optimieren.

## Patentansprüche

1. Verfahren zum Empfangen von Übertragungssignalen, die in verschiedenen Subfrequenzbändern (a, b, c, d) eines Empfangsfrequenzbandes übertragen werden können, wobei
- durch ein Hinzufügen einer Trägerfrequenz zu dem Empfangsfrequenzband und durch eine Vorfilterung des Empfangsfrequenzbandes ein erstes Signalfrequenzband herausgefiltert wird, das die Übertragungssignale enthält,
- durch ein Hinzufügen einer Zwischenfrequenz zu dem ersten Signalfrequenzband und durch eine Demodulierung des ersten Signalfrequenzbandes ein Basisfrequenzband erzeugt wird, das die Übertragungssignale enthält und
- zumindest ein zweites Signalfrequenzband, das die Übertragungssignale enthält, durch eine Nachfilterung aus dem Basisfrequenzband herausgefiltert wird,
wobei die Trägerfrequenz und/oder die Zwischenfrequenz derart mit einem oder mehreren Filterparametern bei der Nachfilterung abgestimmt werden, daß das gewünschte Subfrequenzband als zweites Frequenzband zur Verfügung steht, wobei die in dem zweiten Signalfrequenzband enthaltene Information digitalisiert wird, wobei ein Teil der Nachfilterung als Feinfilterung an den digitalisierten Informationen vorgenommen wird, um die Übertragungssignale in digitaler Form zu erhalten, und wobei auch der digitale Teil der Nachfilterung mit der Trägerfrequenz und/oder der Zwischenfrequenz abgestimmt wird, und wobei die Abstimmung der Nachfilterung durch Steuerung der Filterparameter vorgenommen wird.

2. Verfahren nach Anspruch 1,
wobei bei der Nachfilterung ein Tiefpaßfilter (8) oder ein Hochpaßfilter oder eine Hochpaß-/Tiefpaß-Filterkombination verwendet wird, dessen Grenzfrequenz bzw. deren Grenzfrequenzen derart mit der Trägerfrequenz und/oder der Zwischenfrequenz abgestimmt wird, daß die Grenzfrequenz bzw. die Grenzfrequenzen das gewünschte Subfrequenzband von allen etwaig noch in dem Basisfrequenzband vorhandenen Nachbarfrequenzbändern trennt.

3. Verfahren nach Anspruch 1 oder 2,
wobei nach zumindest teilweiser Durchführung der Nachfilterung das zweite Signalfrequenzband verstärkt wird.

4. Verfahren nach einem der Ansprüche 1 bis 3,
wobei die Trägerfrequenz für die Vorfilterung derart eingestellt wird, daß ein oder mehrere Nachbarfrequenzbänder des gewünschten Subfrequenzbandes bereits bei der Vorfilterung abgetrennt werden.

5. Verfahren nach einem der Ansprüche 1 bis 4,
wobei das in analoger Form vorliegende erste Signalfrequenzband zunächst digitalisiert wird und durch eine digitale Demodulation das Basisfrequenzband erzeugt wird.

6. Verfahren nach einem der Ansprüche 1 bis 4,
wobei nach der Erzeugung des Basisfrequenzbands eine Hochpaßfilterung oder eine Kombination aus Hochpaß- und Tiefpaßfilterung ausgeführt wird, um zumindest ein Subfrequenzband herauszufiltern, das entweder im positiven oder im negativen Frequenzbereich des Basisfrequenzbands liegt, und wobei das herausgefilterte Subfrequenzband digitalisiert wird und durch digitale Konvertierung in einen Frequenzbereich versetzt wird, der den Frequenzwert Null enthält.

7. Empfänger zum Empfangen von Übertragungssignalen, die in verschiedenen Subfrequenzbändern (a, b, c, d) eines Empfangsfrequenzbandes zu dem Empfänger übertragen werden können, mit
- einem ersten Oszillator (15) zum Einkoppeln einer Trägerfrequenz in einen Empfangspfad des Empfangsfrequenzbandes,
- einem Vorfilter (4), das an dem Empfangspfad angeordnet ist, um aus dem Empfangsfrequenzband mit der eingekoppelten Trägerfrequenz ein erstes Signalfrequenzband herauszufiltern, das die Übertragungssignale enthält,
- einem zweiten Oszillator (16) zum Einkoppeln einer Zwischenfrequenz in einen ersten Signalpfad des ersten Signalfrequenzbandes,
- einem Demodulator (7), der an dem ersten Signalpfad angeordnet ist, um das Signalfrequenzband mit der eingekoppelten Zwischenfrequenz zu demodulieren und ein Basisfrequenzband zu erzeugen, das die Übertragungssignale enthält, und
- einem Nachfilter (8), der an einem Basispfad des Basisfrequenzbandes angeordnet ist, um aus dem Basisfrequenzband ein zweites Signalfrequenzband herauszufiltern, welches die Übertragungssignale enthält, **dadurch gekennzeichnet, daß**
eine gemeinsame Frequenz- und Nachfiltersteuerung (18) des Nachfilters (8) sowie des ersten Oszillators (15) und/oder des zweiten Oszillators (16) vorgesehen ist, um die Trägerfrequenz und/oder die Zwischenfrequenz derart mit einem oder mehreren Filterparametern des Nachfilters (8) abzustimmen, daß das gewünschte Subfrequenzband als zweites Signalfrequenzband zur Verfügung steht, wobei an einem zweiten Signalpfad des zweiten Signalfrequenzbandes in Signallaufrichtung hinter dem Nachfilter bzw. hinter dem ersten Teil (8) des Nachfilters ein zweiter Signalbandverstärker (9, 10) zum Verstärken des zweiten Signalfrequenzbandes angeordnet ist, wobei ein Analog-/Digital-Wandler (11) an dem zweiten Signalpfad vorgesehen ist, um die in dem zweiten Signalfrequenzband vorhandene Information zu digitalisieren, wobei in Signallaufrichtung hinter dem Analog/Digital-Wandler (11) ein Digitalfilter (12) vorgesehen ist, um aus der digitalisierten Information die Übertragungssignale herauszufiltern, und wobei auch der Digitalfilter (12) von der gemeinsamen Frequenz- und Nachfiltersteuerung ansteuerbar ist.

8. Empfänger nach Anspruch 7,
wobei der Nachfilter (8) einen Tiefpaßfilter oder einen Hochpaßfilter oder eine Hochpaß-/Tiefpaß-Filterkombination aufweist, dessen Grenzfrequenz bzw. deren Grenzfrequenz derart mit der Trägerfrequenz und/oder der Zwischenfrequenz abstimmbar ist, daß die Grenzfrequenz bzw. die Grenzfrequenzen das gewünschte Subfrequenzband von allen etwaig noch im Basisfrequenzband vorhandenen Nachbarfrequenzbändern trennt.

9. Empfänger nach Anspruch 8,
wobei der zweite Signalbandverstärker (9, 10) und zumindest ein Teil (8) des Nachfilters in einer gemeinsamen integrierten Schaltung angeordnet sind.

10. Empfänger nach Anspruch 8 oder 9,
wobei der zweite Signalpfad einen Bypass (14) zur verstärkungsfreien Weiterleitung des zweiten Signalfrequenzbandes aufweist, der parallel zu dem zweiten Signalbandverstärker (9, 10) geschaltet ist.

11. Empfänger nach einem der Ansprüche 7 bis 10,
wobei der Demodulator (7) und zumindest ein Teil (8) des Nachfilters in einer gemeinsamen integrierten Schaltung angeordnet sind.

12. Empfänger nach einem der Ansprüche 7 bis 11,
wobei in Signallaufrichtung hinter dem Vorfilter und vor dem Demodulator ein Analog/Digital-Wandler angeordnet ist und wobei der Demodulator und der Nachfilter für die digitale Signalbearbeitung ausgebildet sind.

## Claims

1. Method for receiving transmitted signals which can be transmitted in various subfrequency bands (a, b, c, d) of a receive frequency band, in which
- a first signal frequency band containing the transmitted signals is filtered out by adding a carrier frequency to the receive frequency band and by prefiltering of the receive frequency band,
- a frequency baseband containing the transmitted signals is generated by adding an intermediate frequency to the first signal frequency band and by demodulating the first signal frequency band, and
- at least one second signal frequency band containing the transmitted signals is filtered out of the frequency baseband by post-filtering,
in which the carrier frequency and/or the intermediate frequency are matched to one or more filter parameters during the post-filtering in such a manner that the desired subfrequency band is available as second frequency band, in which the information contained in the second signal frequency band is digitized, in which a part of the post-filtering is performed as fine filtering on the digitized information in order to obtain the transmitted signals in digital form, and in which the digital part of the post-filtering is also matched to the carrier frequency and/or the intermediate frequency, and in which the matching of the post-filtering is performed by controlling the filter parameters.

2. Method according to Claim 1, in which, during the post-filtering, a low-pass filter (8) or a high-pass filter or a high-pass/low-pass filter combination is used, the cut-off frequency of which or the cut-off frequencies of which are matched to the carrier frequency and/or the intermediate frequency in such a manner that the cut-off frequency or the cut-off frequencies, respectively, separate the desired subfrequency band from all neighbouring frequency bands which may still be present in the frequency baseband.

3. Method according to Claim 1 or 2, in which the second signal frequency band is amplified after the post-filtering has been performed at least partially.

4. Method according to one of Claims 1 to 3, in which the carrier frequency for the prefiltering is set in such a manner that one or more neighbouring frequency bands of the desired subfrequency band are already split off during prefiltering.

5. Method according to one of Claims 1 to 4, in which the first signal frequency band present in analog form is first digitized and the frequency baseband is generated by digital demodulation.

6. Method according to one of Claims 1 to 4, in which, after the generation of the frequency baseband, a high-pass filtering or a combination of high-pass and low-pass filtering is performed in order to filter out at least one subfrequency band which is either in the positive or in the negative frequency range of the frequency baseband, and in which the subfrequency band filtered out is digitized and is transposed by digital conversion into a frequency range which contains the zero frequency value.

7. Receiver for receiving transmitted signals which can be transmitted to the receiver in various subfrequency bands (a, b, c, d) of a receive frequency band, comprising
- a first oscillator (15) for inserting a carrier frequency into a receive path of the receive frequency band,
- a prefilter (4) which is arranged in the receive path in order to filter a first signal frequency band containing the transmitted signals out of the receive frequency band with the inserted carrier frequency,
- a second oscillator (16) for inserting an intermediate frequency into a first signal path of the first signal frequency band,
- a demodulator (7) which is arranged in the first signal path in order to demodulate the signal frequency band with the inserted intermediate frequency and to generate a frequency baseband which contains the transmitted signals, and
- a post-filter (8) which is arranged in a base path of the frequency baseband in order to filter a second signal frequency band containing the transmitted signals out of the frequency baseband,
**characterized in that** a common frequency and post-filter control (18) of the post-filter (8) and of the first oscillator (15) and/or the second oscillator (16) is provided in order to match the carrier frequency and/or the intermediate frequency to one or more filter parameters of the post-filter (8) in such a manner that the desired subfrequency band is available as second signal frequency band, in which a second signal band amplifier (9, 10) for amplifying the second signal frequency band is arranged after the post-filter or, respectively, after the first part (8) of the post-filter in a second signal path of the second signal frequency band in the direction of signal propagation, in which an analog/digital converter (11) is provided in the second signal path in order to digitize the information present in the second signal frequency band, in which a digital filter (12) is provided behind the analog/digital converter (11) in the direction of signal propagation in order to filter the transmitted signals out of the digitized information and in which the digital filter (12) can also be driven by the common frequency and post-filter control.

8. Receiver according to Claim 7, in which the post-filter (8) exhibits a low-pass filter or a high-pass filter or a high-pass/low-pass filter combination, the cut-off frequency and/or cut-off frequencies of which can be matched to the carrier frequency and/or the intermediate frequency in such a manner that the cut-off frequency or cut-off frequencies separate the desired subfrequency band from all neighbouring frequency bands which may still be present in the frequency baseband.

9. Receiver according to Claim 8, in which the second signal band amplifier (9, 10) and at least a part (8) of the post-filter are arranged in a common integrated circuit.

10. Receiver according to Claim 8 or 9, in which the second signal path exhibits a bypass (14) for unamplified forwarding of the second signal frequency band, which is connected in parallel with the second signal band amplifier (9, 10).

11. Receiver according to one of Claims 7 to 10, in which the demodulator (7) and at least a part (8) of the post-filter are arranged in a common integrated circuit.

12. Receiver according to one of Claims 7 to 11, in which an analog/digital converter is arranged behind the prefilter and in front of the demodulator in the direction of signal propagation and in which the demodulator and the post-filter are constructed for digital signal processing.

## Revendications

1. Procédé pour la réception de signaux transmis qui peuvent être transmis dans différentes sous-bandes de fréquence (a, b, c, d) d'une bande de fréquence de réception,
- dans lequel, par un ajout d'une fréquence porteuse à la bande de fréquence de réception et par un pré-filtrage de la bande de fréquence de réception, on filtre une première bande de fréquence de signal qui contient les signaux transmis,
- dans lequel, par un ajout d'une fréquence intermédiaire à la première bande de fréquence de signal et par une démodulation de la première bande de fréquence de signal, on produit une bande de fréquence de base qui contient les signaux transmis, et
- dans lequel, par un post-filtrage de la bande de fréquence de base, on filtre une deuxième bande de fréquence de signal qui contient les signaux transmis,
la fréquence porteuse et/ou la fréquence intermédiaire étant accordées de telle sorte avec un ou plusieurs paramètres de filtrage lors du post-filtrage que la sous-bande de fréquence souhaitée est disponible comme deuxième bande de fréquence, l'information contenue dans la deuxième bande de fréquence de signal étant numérisée, une partie du post-filtrage étant effectuée comme filtrage fin sur les informations numérisées pour obtenir les signaux transmis sous une forme numérique, la partie numérique du post-filtrage étant aussi accordée avec la fréquence porteuse et/ou avec la fréquence intermédiaire et l'accord du post-filtrage étant effectué au moyen d'une commande des paramètres de filtrage.

2. Procédé selon la revendication 1,
dans lequel, lors du post-filtrage, on utilise un filtre passe-bas (8) ou un filtre passe-haut ou une combinaison de filtre passe-haut et de filtre passe-bas dont la fréquence de coupure ou les fréquences de coupure sont accordées de telle sorte avec la fréquence porteuse et/ou avec la fréquence intermédiaire que la fréquence de coupure ou les fréquences de coupure séparent la sous-bande de fréquence souhaitée de toutes les bandes de fréquence voisines éventuellement encore présentes dans la bande de fréquence de base.

3. Procédé selon la revendication 1 ou 2,
dans lequel, après au moins une mise en oeuvre partielle du post-filtrage, on amplifie la deuxième bande de fréquence de signal.

4. Procédé selon l'une des revendications 1 à 3,
dans lequel on règle de telle sorte la fréquence porteuse pour le pré-filtrage qu'une ou plusieurs bandes de fréquence voisines de la sous-bande de fréquence souhaitée sont déjà séparées lors du pré-filtrage.

5. Procédé selon l'une des revendications 1 à 4,
dans lequel on numérise d'abord la première bande de fréquence de signal présente sous forme analogique et on produit la bande de fréquence de base par une démodulation numérique.

6. Procédé selon l'une des revendications 1 à 4,
dans lequel, après la production de la bande de fréquence de base, on effectue un filtrage passe-haut ou une combinaison de filtrage passe-haut et de filtrage passe-bas pour filtrer au moins une sous-bande de fréquence qui se trouve soit dans la plage de fréquence positive soit dans la plage de fréquence négative de la bande de fréquence de base et dans lequel on numérise la sous-bande de fréquence filtrée et on la déplace par une conversion numérique dans une plage de fréquence qui contient la valeur de fréquence nulle.

7. Récepteur pour la réception de signaux transmis qui peuvent être transmis au récepteur dans différentes sous-bandes de fréquence (a, b, c, d) d'une bande de fréquence de réception, comportant
- un premier oscillateur (15) pour introduire une fréquence porteuse dans une voie de réception de la bande de fréquence de réception,
- un filtre amont (4) qui est placé dans la voie de réception pour filtrer à partir de la bande de fréquence de réception avec la fréquence porteuse introduite une première bande de fréquence de signal qui contient les signaux transmis,
- un deuxième oscillateur (16) pour introduire une fréquence intermédiaire dans une première voie de signal de la première bande de fréquence de signal,
- un démodulateur (7) qui est placé dans la première voie de signal pour démoduler la bande de fréquence de signal avec la fréquence intermédiaire introduite et pour produire une bande de fréquence de base qui contient les signaux transmis, et
- un filtre aval (8) qui est placé dans une voie de base de la bande de fréquence de base pour filtrer à partir de la bande de fréquence de base une deuxième bande de fréquence de signal qui contient les signaux transmis,
**caractérisé par le fait que**
une commande de fréquence et de post-filtrage (18) commune du filtre aval (8) ainsi que du premier oscillateur (15) et/ou du deuxième oscillateur (16) est prévue pour accorder la fréquence porteuse et/ou la fréquence intermédiaire de telle sorte avec un ou plusieurs paramètres de filtrage du filtre aval (8) que la sous-bande de fréquence souhaitée est disponible comme deuxième bande de fréquence de signal, dans une deuxième voie de signal de la deuxième bande de fréquence de signal, derrière - dans le sens de propagation du signal - le filtre aval ou la première partie (8) du filtre aval, un deuxième amplificateur de bande de signal (9, 10) est placé pour amplifier la deuxième bande de fréquence de signal, un convertisseur analogique-numérique (11) est prévu dans la deuxième voie de signal pour numériser l'information présente dans la deuxième bande de fréquence de signal, un filtre numérique (12) est prévu derrière - dans le sens de propagation du signal - le convertisseur analogique-numérique (11) pour filtrer les signaux transmis à partir de l'information numérisée, et le filtre numérique (12) peut être commandé par la commande de fréquence et de post-filtrage commune.

8. Récepteur selon la revendication 7,
dans lequel le filtre aval (8) comporte un filtre passe-bas ou un filtre passe-haut ou une combinaison de filtre passe-haut et de filtre passe-bas dont la fréquence de coupure ou les fréquences de coupure sont accordées de telle sorte avec la fréquence porteuse et/ou avec la fréquence intermédiaire que la fréquence de coupure ou les fréquences de coupure séparent la sous-bande de fréquence souhaitée de toutes les bandes de fréquence voisines éventuellement encore présentes dans la bande de fréquence de base.

9. Récepteur selon la revendication 8,
dans lequel le deuxième amplificateur de bande de signal (9, 10) et au moins une partie (8) du filtre aval sont placés dans un circuit intégré commun.

10. Récepteur selon la revendication 8 ou 9,
dans lequel la deuxième voie de signal comporte une dérivation (14) qui est destinée à retransmettre sans amplification la deuxième bande de fréquence de signal et qui est montée en parallèle avec le deuxième amplificateur de bande de signal (9, 10).

11. Récepteur selon l'une des revendications 7 à 10,
dans lequel le démodulateur (7) et au moins une partie (8) du filtre aval sont placés dans un circuit intégré commun.

12. Récepteur selon l'une des revendications 7 à 11,
dans lequel un convertisseur analogique-numérique est placé dans le sens de propagation du signal derrière le filtre amont et devant le démodulateur et dans lequel le démodulateur et le filtre aval sont conçus pour le traitement de signal numérique.
